# EUROPEAN PATENT SPECIFICATION

(11) **EP 0 743 646 B1**
(45) Date of publication and mention of the grant of the patent: **26.09.2001**
(21) Application number: 96303536.5
(22) Date of filing: 17.05.1996
(51) Int. Cl.: G11B 25/06, G11B 15/32

(54) **Reel table transferring mechanism of magnetic recording/reproducing apparatus**
Spulendrehteller-Übertragungsmechanismus für Magnetaufzeichnungs-/Wiedergabegerät
Mécanisme de transfert de platine de bobine d'appareil d'enregistrement/reproduction magnétique

(30) Priority: 18.05.1995 KR 9512459
(43) Date of publication of application: 20.11.1996
(73) Proprietor: SAMSUNG ELECTRONICS CO., LTD., Suwon-city, Kyungki-do 441-373 (KR)
(72) Inventor: Hong, Min-pyo, Seocho-gu, Seoul (KR)
(74) Representative: Chugg, David John

(56) References cited:
- EP-A- 0 463 786
- DE-A- 3 234 854
- US-A- 4 903 149

## Description

The present invention relates to a reel table transferring mechanism of a magnetic recording/reproducing apparatus such as VTR's, camcorders or digital-video cassette recorders (D-VCR's), and more particularly, to a reel table transferring mechanism of a magnetic recording/reproducing apparatus, in which a cassette having one of two different sizes is selectively loaded.

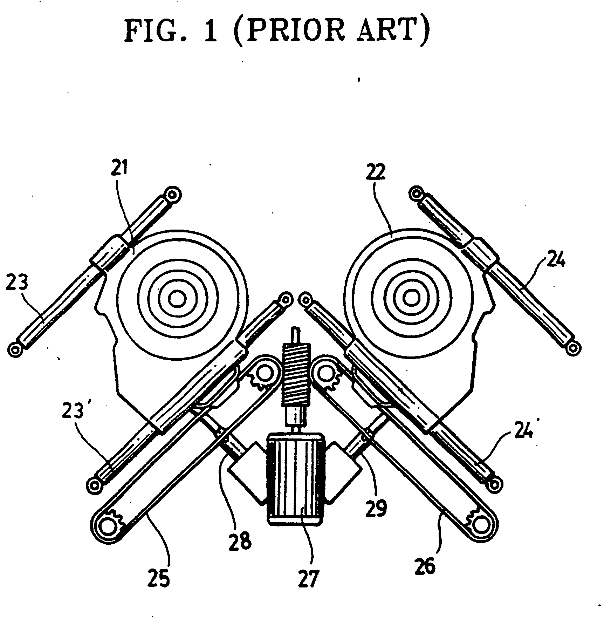

Generally, a pair of reel tables are provided in a magnetic recording/reproducing apparatus using a magnetic tape, such as a VTR, Camcorder, or D-VCR. A mechanism has recently been suggested in *Japan Television Associates* Vol. 44, No.9, p.1216, in which a pair of reel tables can move to select one of at least two tape cassettes 300 and 400 of different sizes as shown in Figure 1. Reel tables 21 and 22 are supported to slide along respective pairs of guide shafts 23, 23' and 24, 24', respectively. Timing belts 25 and 26 driven by a motor 27 enable the reel tables 21 and 22 to move, varying the distance therebetween to enable loading of tape cassettes of different sizes.

In the above-described mechanism in which the reel tables 21 and 22 move linearly, installing the required guide rail pairs 23, 23' and 24, 24' takes up space on the deck and complicates the apparatus.

Also, since each reel table is coupled by just one stopper at each side thereof, the reel tables 21 and 22 are unstable. Hence, the reel tables 21 and 22 may generate noise and the mechanism may not operate smoothly.

DE 3234854 discloses a tape deck mechanism having a pair of shafts on which rotating arms are mounted, those rotating arms carrying reel tables for receiving a tape cassette, the distances between the reel tables being adjustable by rotating the rotating arms.

With a view to solving or reducing the above problems, it is an aim of preferred embodiments of the present invention to provide a reel table transferring mechanism of a magnetic recording/reproducing apparatus by which a smoother transfer of the reel table can be achieved.

According, to a first aspect of the present invention, there is provided a reel table transferring mechanism of a magnetic recording/reproducing apparatus comprising: a deck where first and second arc-shaped holes are formed; first and second fixed shafts separated by a predetermined distance fixed to said deck; a pair of rotating arms, rotatably installed around said first and second fixed shafts by which reel tables for receiving a tape cassette are supported; the mechanism being characterised in that there is further provided: a pair of driving arms, each having geared portions that engage with each other, rotatably coupled to said first and second fixed shafts, respectively and elastically biased toward the said rotating arms; a driving motor for driving said driving arms by a gear train coupled to said geared portions of said driving arms; and connecting means for coupling said. driving arms with said rotating arms so that a driving force of said driving motor is transferred to each of said rotating arms via said driving arms.

Here, it is preferred in the present invention that motors for driving the reel tables are installed at the rotating arms, respectively.

Also, the. connecting means preferably has a structure consisting of cavities formed at the bottoms of the driving arms, respectively; indented portions formed on the rotating arms corresponding to the cavities, respectively; and a coil spring inserted respectively between the cavities and the indented portions.

It is preferred in the present invention to further comprise a preventing means for preventing excessive rotation of the rotating arms, and that the preventing means comprises: protrusions formed on the rotating arms; and stoppers, formed on the deck, for restricting the rotation of the rotating arms by contacting the protrusions.

A reel table transferring mechanism of a magnetic recording/reproducing apparatus having a pair of reel tables, installed on a deck, on which reels of a tape cassette are placed, and adjusting means for adjusting the interval between said reel tables so that tape cassettes of different sizes can be selectively placed on said reel tables, wherein said adjusting means comprises: first and second fixed shafts fixed to said deck being separated at a predetermined interval; a pair of rotating arms, by which said reel tables are supported, rotatably installed around said first and second fixed shafts; and rotating means for rotating said rotating arms, whereby the distance between said reel tables is adjusted by the rotation of said rotating arms, said rotating means includes geared portions at ends of said rotating arms, said geared portions being engaged with each other, the transferring mechanism being characterised in that one geared portion of said rotating arms is controlled by a driving force of a driving motor via a gear train coupled to said geared portion of said rotating arm.

Here, preferably the first and second arc-shaped holes corresponding to the rotation of the reel tables are formed on the deck, and the motors for driving the reel tables are installed under the rotating arms, respectively.

Preferably, the mechanism further comprises preventing means for preventing excessive rotation of said rotating arms.

Said preventing means preferably comprises: protrusions formed on said rotating arms, respectively; and stoppers formed on said deck, for restricting the rotation of said rotating arms by contacting said protrusions.

For a better understanding of the invention, and to show how embodiments of the same may be carried into effect, reference will now be made, by way of example, to the accompanying diagrammatic drawings, in which:
Figure 1 is a plan view schematically illustrating a conventional reel table transferring mechanism;
Figure 2 is a perspective view illustrating a reel table transferring mechanism according to one embodiment of the present invention;
Figure 3 is an exploded perspective view showing the essential parts of the mechanism of Figure 2;
Figure 4 is a perspective view illustrating a reel table transferring mechanism according to another embodiment of the present invention; and
Figures 5 and 6 are plan views respectively illustrating the transferred positions of the reel tables according to one of the embodiments of the present invention.

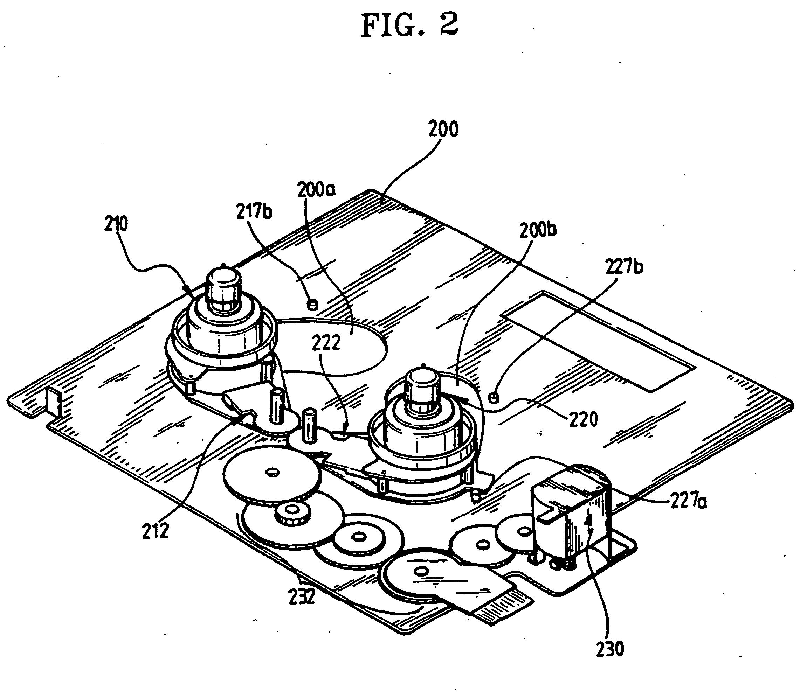

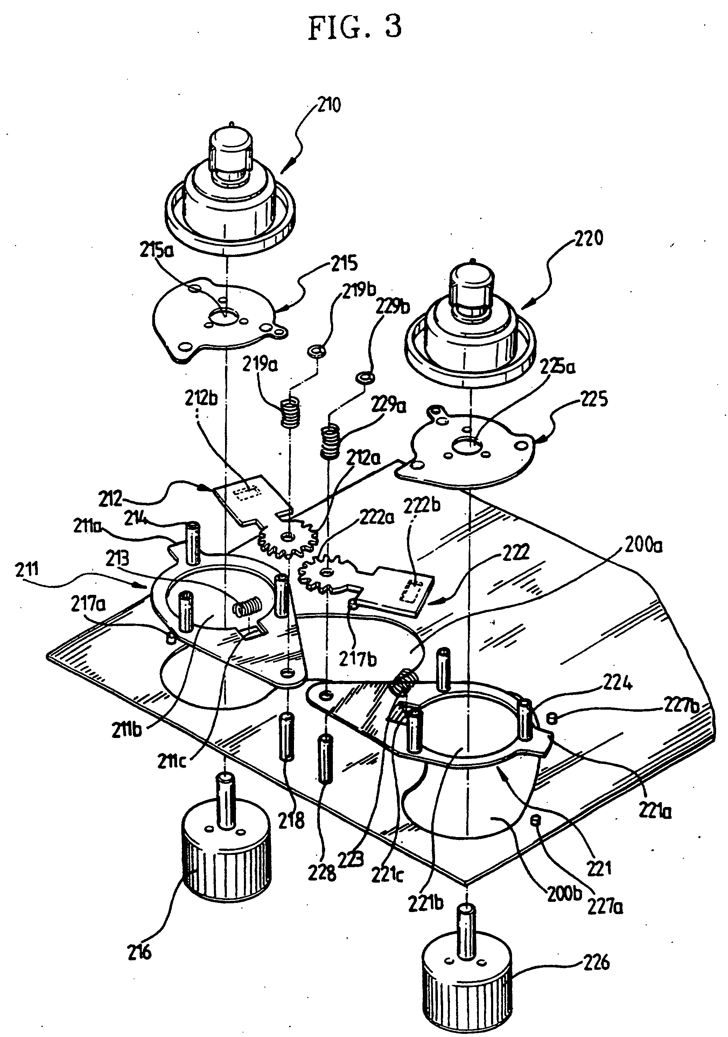

Referring to Figures 2 and 3 showing the reel table transferring mechanism of a magnetic recording/reproducing apparatus according to an embodiment of the present invention, first and second arc-shaped holes 200a and 200b are symmetrically formed on a deck 200. First and second fixed shafts 218 and 228 are fixed on the deck 200 being separated at a predetermined interval between the first and second holes 200a and 200b. Rotating arms 211 and 221 are rotatably coupled to the first and second fixed shafts 218 and 228, respectively. Driving arms 212 and 222 each having a geared portion 212a and 222a, respectively, on one end thereof are rotatably coupled to the first and second fixed shafts 218 and 228, respectively, wherein geared portions 212a and 222a are engaged with each other. The driving arms 212 and 222 are elastically biased toward the rotating arms 211 and 221 by springs 219a and 229a and washers 219b and 229b, respectively.

A driving motor 230 for generating a driving force is installed at one side of the deck 200. The gear driving force is transmitted to the geared portion 222a from the driving motor 230 via a gear train 232.

A connecting means for connecting the driving arms 212 and 222 and the rotating arms 211 and 221 is provided so that the power of the driving motor 230 can be transmitted to the respective rotating arms 211 and 221. The connecting means includes: cavities 212b and 222b formed on the respective lower surfaces of the driving arms 212 and 222; indented portions 211c and 221c formed on the respective rotating arms 211 and 221 corresponding to the cavities 212b and 222b; and coil springs 213 and 223 disposed between the cavities 212b and 222b and indented portions 211c and 221c, respectively. That is, the coil springs 213 and 223 are disposed halfway in the cavities 212b and 222b, respectively, and halfway in the indented portions 211c and 221c, respectively. Thus, the driving motor 230 transmits power to the rotating arms 211 and 221 via the coil springs 213 and 223.

Here, the reel tables 210 and 220 and the motors 216 and 226 for rotating thereof are installed on the rotating arms 211 and 221, respectively. In more detail, the coupling holes 211b and 221b to which the motors 216 and 226 are coupled are formed on each rotating arm 211 and 221. The plates 215 and 225 having holes 215a and 225a are supported above the coupling holes 211b and 221b by a plurality of supports 214 and 224. The rotors of motors 216 and 226 connect tightly to the reel tables 210 and 220 through the holes 215a and 225a of the plates 215 and 225.

Meanwhile, a preventing means for preventing excess rotation of the rotating arms 211 and 221 is further provided constituted by protrusions 211a and 221a formed at the outer ends of the rotating arms 211 and 221, and stoppers 217a, 217b, 227a and 227b formed on the deck 200 for limiting the rotation of the arms 211 and 221. Here, the stoppers 217a, 217b, 227a and 227b can be formed at predetermined positions along the rotating course of the protrusions 211a and 221a.

The operation and effects of the reel table transferring mechanism according to the present invention will now be described.

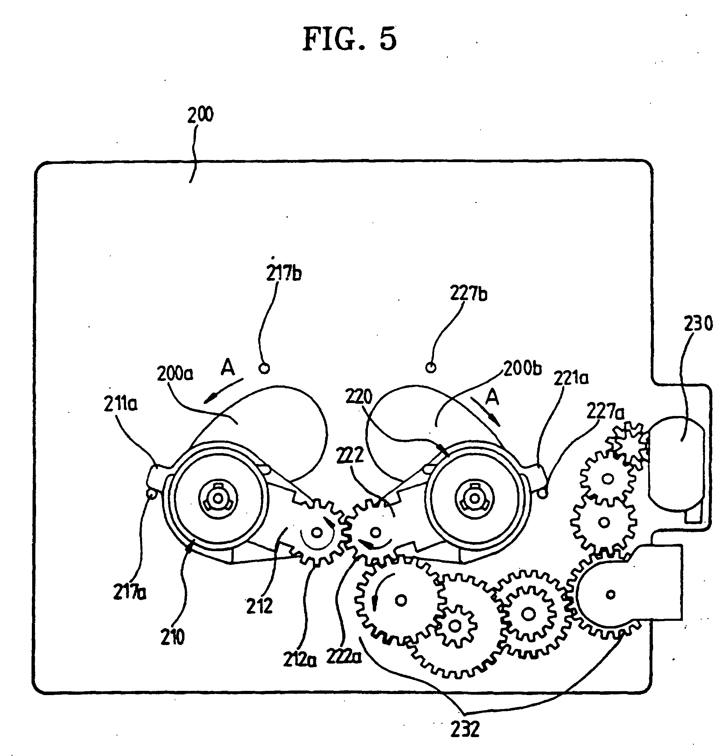

Referring to Figures 2, 3 and 5, when a large tape cassette is loaded, the distance between the reel tables 210 and 220 is adjusted as follows. First, when the driving motor 230 is driven so that the last gear of the gear train 232 engaged with the gear portion 222a of the driving arm 222 rotates counterclockwise, the two engaged. rotating arms 211 and 221 rotate along the direction of arrow A in Figure 5. At this time, the protrusions 211a and 221a of the rotating arms 211 and 221 contact the stoppers 217a and 227a. Driving arms 212 and 222 are rotated slightly further as driving arms 212 and 222 press against the coil springs 213 and 223 by the power of the driving motor 230. Here, the rotating arms 211 and 221 adhere tightly against the stoppers 217a and 227a due to the restoring forces of the springs 213 and 223. Thus, the reel tables 210 and 220 are stably disposed at their final positions.

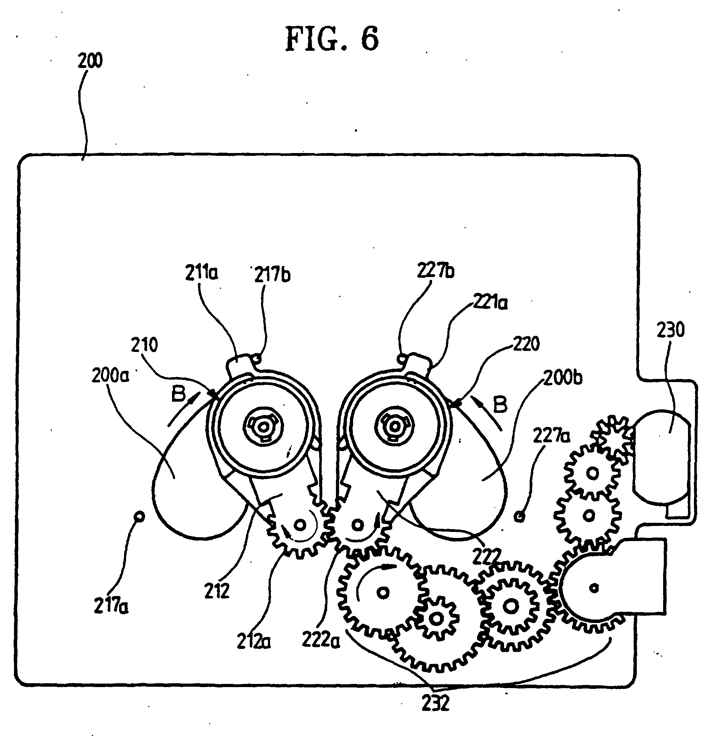

When a small tape cassette is loaded, referring to Figures 2, 3 and 6, the distance between the reel tables 210 and 220 is controlled as follows. When the driving motor 230 is driven so that the final gear of the gear train 232 which is engaged with the gear portions 222a of the driving arm 222 rotates clockwise, the two engaged rotating arms 211 and 221 rotate in the direction of arrow B. At this time, the protrusions 211a and 221a of the rotating arms 211 and 221 make contact with the stoppers 217b and 227b. The driving arms 212 and 222 are further rotated by the power of the driving motor 230 depressing the coil springs 213 and 223. Here, the rotating arms 211 and 221 adhere closely to the respective stoppers 217b and 227b due to the restoring force of springs 213 and 223. Thus, the reel tables 210 and 220 are stably at rest at their final positions.

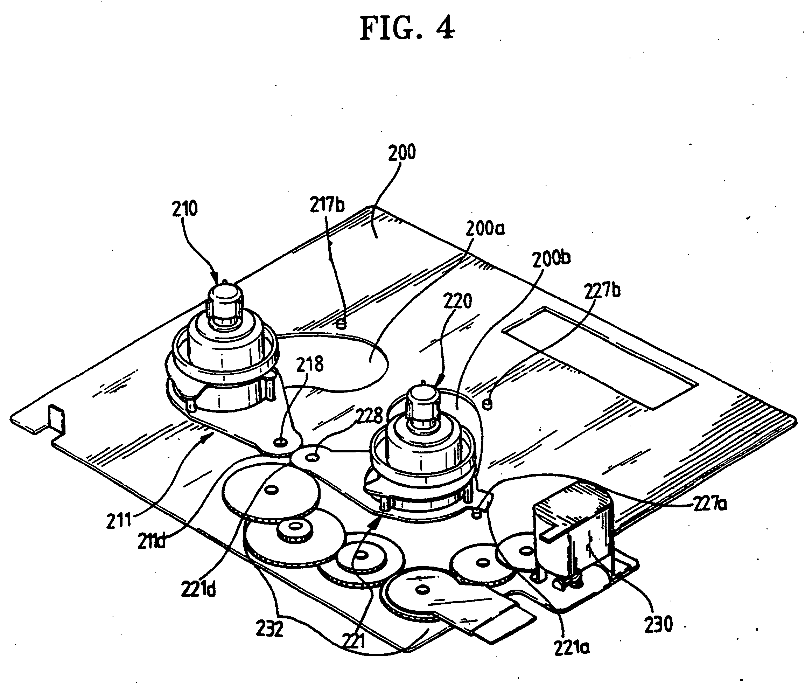

On the other hand, referring to Figure 4, another embodiment of the present invention exhibits a structure where the geared portions 211d and 221d are directly formed on the rotating arms 211 and 221. The rotation directions of the rotating arms 211 and 221 are determined according to the rotation direction of the driving motor 230 as above. Hence, the interval between the reel tables 210 and 220 can be adjusted. Also, the rotation angle of the rotating arms 211 and 221 can be restricted by the stoppers 217a, 217b, 227a and 227b.

In a mechanism according to the embodiment of Figure 4, a means for adjusting the interval of the two reel tables 210 and 220 has the following structure. Here, the parts of Figure 4 that are the same as those described in Figures. 2 and 3 are indicated by the same reference numerals and nomenclatures.

The arc-shaped holes 200a and 200b are symmetrically formed on the deck 200. The first and second fixed shafts 218 and 228 are fixedly installed between the two holes 200a and 200b separated by a predetermined distance. The rotating arms 211 and 221 are rotatably installed at the first and second fixed shafts 218 and 228, respectively. The rotating arms 211 and 221 are rotated by means of a predetermined rotating means.

The motors 216 and 226 are each installed under the rotating arms 211 and 221, and the reel tables 210 and 220 are fixed to the shafts of the motors 216 and 226, respectively.

The above-mentioned rotating means is structured as follows. Geared portions 211d and 221d are formed at the ends of rotating arm 211 and 221, in which the geared portions 211d and 221d are engaged with each other. The driving motor 230 for generating a driving force is installed at one side of the deck 200. The driving motor 230 and the geared portion 231d are connected via the gear train 232. Thus, the rotating arms 211 and 221 are rotated simultaneously by the driving force of the driving motor 230.

As described above, a means for preventing excessive rotation of the rotating arms 211 and 221 is further provided. The preventing means comprises: protrusions 211a and 221a formed at the radial ends of the rotating arms 211 and 221, respectively, stoppers 217a, 217b, 227a and 227b for limiting the rotation of the arms 211 and 221 formed on the deck 200. Accordingly, the rotation of the rotating arms 211 and 221 are restricted by the stoppers.

As described above, the advantages of the reel table transferring mechanism of the magnetic recording/reproducing apparatus according to embodiments of the present invention are as follows.

First, since the interval between the reel tables 210 and 220 is adjusted by the rotary rotating arms 211 and 221, the operation thereof becomes smooth and the structure thereof becomes simplified.

Second, since the reel tables 210 and 220 are firmly pressed by the spring force, the reel running becomes smooth and less noise is generated than the conventional mechanism.

## Claims

1. A reel table transferring mechanism of a magnetic recording/reproducing apparatus comprising:
a deck (200) where first and second arc-shaped holes (200a, 200b) are formed;
first and second fixed shafts (218, 228) separated by a predetermined distance fixed to said deck (200);
a pair of rotating arms (211, 221), rotatably installed around said first and second fixed shafts (218, 228), by which reel tables (210, 220) for receiving a tape cassette are supported;
the mechanism being **characterised in that** there is further provided:
a pair of driving arms (212, 222), each having geared portions (212a, 222a) that engage with each other, rotatably coupled to said first and second fixed shafts (218, 228), respectively and elastically biased toward the said rotating arms;
a driving motor (230) for driving said driving arms (212, 222) by a gear train (232) coupled to said geared portions (222a) of said driving arms (212, 222); and
connecting means for coupling said driving arms (212, 222) with said rotating arms (211, 221) so that a driving force of said driving motor (230) is transferred to each of said rotating arms (211, 221) via said driving arms (212, 222).

2. A reel table transferring mechanism of a magnetic recording/reproducing apparatus as claimed in claim 1, wherein motors (216, 226) for driving said reel tables are installed at said rotating arms (211, 221), respectively.

3. A reel table transferring mechanism of a magnetic recording/reproducing apparatus as claimed in claim 1 or 2, wherein said connecting means comprises:
cavities (212b, 222b) formed at the bottoms of said driving arms (212, 222), respectively;
indented portions (211c, 221c) formed on said rotating arms (211, 221) corresponding to said cavities (212b, 222b), respectively; and
a coil spring (213, 223) inserted respectively between said cavities and said indented portions (211c, 221c).

4. A reel table transferring mechanism of a magnetic recording/reproducing apparatus as claimed in claim 1, 2 or 3, further comprising preventing means for preventing excessive rotation of said rotating arms (211, 221).

5. A reel table transferring mechanism of a magnetic recording/reproducing apparatus as claimed in claim 4, wherein said preventing means comprises:
protrusions (211a, 221a) formed on said rotating arms (211, 221); and
stoppers (217a, 217b, 227a, 227b), formed on said deck (200), for restricting the rotation of said rotating arms (211, 221) by contacting said protrusions (211a, 221a).

6. A reel table transferring mechanism of a magnetic recording/reproducing apparatus having a pair of reel tables (210, 220), installed on a deck (200), on which reels of a tape cassette are placed, and adjusting means for adjusting the interval between said reel tables (210, 220) so that tape cassettes of different sizes can be selectively placed on said reel tables (210, 220), wherein said adjusting means comprises:
first and second fixed shafts (218, 228) fixed to said deck (200) being separated at a predetermined interval;
a pair of rotating arms (211, 221), by which said reel tables (210, 220) are supported, rotatably installed around said first and second fixed shafts (218, 228); and
rotating means for rotating said rotating arms (211, 221), whereby the distance between said reel tables (210, 220) is adjusted by the rotation of said rotating arms (211, 221), said rotating means includes geared portions (211d, 221d) at ends of said rotating arms (211, 221), said geared portions (211d, 221d) being engaged with each other, the transferring mechanism being **characterised in that** one geared portion (221d) of said rotating arms (211, 221) controlled by a driving force of a driving motor (230) via a gear train (232) coupled to said geared portion (221b) of said rotating arm.

7. A reel table transferring mechanism of a magnetic recording/reproducing apparatus as claimed in claim 5 or 6, wherein first and second arc-shaped holes (200a, 200b) corresponding to the rotation of said reel tables (210, 220) are formed on said deck (200), and motors (216, 226) for driving said reel tables (210, 220) are installed under said rotating arms (211, 221), respectively.

8. A reel table transferring mechanism of a magnetic recording/reproducing apparatus as claimed in claim 5, 6 or 7, further comprising preventing means for preventing excessive rotation of said rotating arms (211, 221).

9. A reel table transferring mechanism of a magnetic recording/reproducing apparatus as claimed in claim 5, 6 7 or 8, wherein said preventing means comprises:
protrusions (211a, 221a) formed on said rotating arms (211, 221), respectively; and
stoppers (217a, 217b, 227a, 227b), formed on said deck (200), for restricting the rotation of said rotating arms (211, 221) by contacting said protrusions (211a, 221a).

## Patentansprüche

1. Spulentisch-Überführungsmechanismus einer Magnet-Aufzeichnungs/Wiedergabe-Vorrichtung, der umfasst:
eine Platte (200), in der ein erstes und ein zweites bogenförmiges Loch (200a, 200b) ausgebildet sind;
eine erste und eine zweite stationäre Welle (218, 228), die um einen vorgegebenen Abstand getrennt an der Platte (200) befestigt sind;
ein Paar Dreharme (211, 221), die um die erste und die zweite stationäre Welle (218, 228) herum drehbar installiert sind, und von denen Spulentische (210, 220), die eine Bandkassette aufnehmen, getragen werden;
wobei der Mechanismus **dadurch gekennzeichnet** ist, dass des Weiteren vorhanden ist;
ein Paar Antriebsarme (212, 222), die jeweils mit Zähnen versehene Abschnitte (212a, 222a) aufweisen, die miteinander in Eingriff kommen, und die drehbar mit der ersten bzw. der zweiten stationären Welle (218, 228) verbunden und federnd auf die Dreharme zu gespannt sind;
ein Antriebsmotor (230), der die Antriebsarme (212, 222) Ober einen Räderzug (232) antreibt, der mit den mit Zähnen versehenen Abschnitten (222a) der Antriebsarme (212, 222) verbunden ist; und
eine Verbindungseinrichtung, die die Antriebsarme (212, 222) mit den Dreharmen (211, 221) verbindet, so dass eine Antriebskraft des Antriebsmotors (230) Ober die Antriebsarme (212, 222) auf jeden der Dreharme (211, 221) Obertragen wird.

2. Spulentisch-Überführungsmechanismus einer Magnet-Aufzeichnungs/Wiedergabe-Vorrichtung nach Anspruch 1, wobei Motoren (216, 226), die die Spulentische antreiben, jewells an den Dreharmen (211, 221) installiert sind.

3. Spulentisch-Überführungsmechanismus einer Magnet-Aufzelchnungs/Wiedergabe-Vorrichtung nach Anspruch 1 oder 2, wobei die Verbindungseinrichtung umfasst;
Hohlräume (212b, 222b). die jewells an den unteren Enden der Antriebsarme (212, 222) ausgebildet sind;
vertiefte Abschnitte (211c, 221c), die an den Dreharmen (211, 221) jeweils den Hohlräumen (212b, 222b) entsprechend ausgebildet sind; und
eine Schraubenfeder (213, 223), die jeweils zwischen die Hohlräume und die vertieften Abschnitte (211c 221c) eingeführt ist.

4. Spulentisch-Überführungsmechanismus einer Magnet-Aufzeichnungs/Wiedergabe-Vorrichtung nach Anspruch 1,2 oder 3, der des Welteren eine Verhinderungselnrichtung umfasst, die zu starke Drehung der Dreharme (211, 221) verhindert.

5. Spulentisch-Überführungsmechanismus einer Magnet-Aufzeichnungs/Wiedergabe-Vorrichtung nach Anspruch 4, wobei die Verhinderungseinrichtung umfasst:
Vorsprünge (211a, 221a), die an den Dreharmen (211, 221) ausgebildet sind; und
Anschläge (217a, 217b, 227a, 227b), die an der Platte (200) ausgebildet sind, um die Drehung der Dreharme (211, 221) durch Kontakt mit den Vorsprüngen (211a, 221a) einzuschränken.

6. Spulentisch-Überfuhrungsmschanismus einer Magnet-Aufzeichnungs/Wiedergabe-Vorrichtung mit einem Paar Spulentische (210, 220), die auf einer Platte (200) installiert sind, auf die Spulen einer Bandkassette aufgelegt werden, sowie einer Einstelleinrichtung zum Einstellen des Zwischenraums zwischen den Spulentischen (210, 220). so dass Bandkassetten unterschiedlicher Größe wahlweise auf die Spulentische (210, 220) aufgelegt werden können, wobei die Einstelleinrichtung umfasst:
eine erste und eine zweite stationäre Welle (218, 228), die an der Platte (200) befestigt und um einen vorgegebenen Abstand getrennt sind;
ein Paar Dreharme (211, 221), von denen die Spulentische (210, 220) getragen werden und die um die erste und die zweite stationäre Welle (218, 228) herum drehbar installiert sind; und
eine Dreheinrichtung, dle die Dreharme (211, 221) dreht, wobei der Abstand zwischen den Spulentischen (210, 220) durch die Drehung der Dreharme (211, 221) eingestellt wird und die Dreheinrichtung mit Zähnen versehene Abschnitte (211d, 221 d) an Enden der Dreharme (211, 221) enthält, wobei die mit Zähnen versehenen Abschnitte (211d, 221d) mltelnander In Eingriff sind, und wobei der Überführungsmechanismus **dadurch gekennzeichnet** ist, dass ein mit Zähnen versehener Abschnitt (221d) der Dreharme (211, 221) durch eine Antriebskraft eines Antriebsmotors (230) über einen Räderzug (232) gesteuert wird, der mit dem mit Zähnen versehenen Abschnitt (221b) des Dreharms verbunden ist.

7. Spulentisch-Überführungsmechanismus einer Magnet-Aufzeichnungs/Wiedergabe-Vorrichtung nach Anspruch 5 oder 6, wobei ein erstes und ein zweites bogenförmiges Loch (200a, 200b), entsprechend der Drehung der Spulentische (210, 220) in der Platte (200) ausgebildet sind und Motoren (216, 226), die die Spulentische (210, 220) antreiben, jeweils unter den Dreharmen (211, 221) installiert sind.

8. Spulentisch-Überführungsmechanismus einer Magnet-Aufzeichnungs/Wiedergabe-Vorrichtung nach Anspruch 5, 6 oder 7, der des Weiteren eine Verhinderungseinrichtung umfasst, die zu starke Drehung der Dreharme (211, 221) verhindert.

9. Spulentisch-Überführungsmechanismus einer Magnet-Aufzeichnungs/Wiedergabe-Vorrichtung nach Anspruch 5, 6, 7 oder 8, wobei die Verhinderungseinrichlung umfasst
Vorsprünge (211a, 221a), die jeweils an den Dreharmen (211, 221) ausgebildet sind; und
Anschläge (217a, 217b, 227a, 227b), die an der Platte (200) ausgebildet sind, um die Drehung der Dreharme (211, 221) durch Kontakt mit den Vorsprüngen (211a, 221a) einzuschränken.

## Revendications

1. Mécanisme de déplacement de plateaux porte-bobines d'un dispositif d'enregistrement/lecture magnétique, comprenant :
une platine (200) où sont formés un premier et un deuxième trous (200a, 200b) de forme arquét ;
un premier et un deuxième axes (218, 228) séparés de ladite platine (200) par une distance fixe prédéterminée ;
une paire de bras rotatifs (211, 221) installés de manière à pouvoir tourner autour desdits premier et deuxième axes (218, 228), par lesquels sont supportés des plateaux (210, 220) porte-bobines destinés à recevoir une cassette de bande ;
le mécanisme étant **caractérisé en ce qu'**il comprend en outre :
une paire de bras d'entraînement (212, 222) ayant chacun des parties dentées (212a, 222a) en prise les unes avec les autres, respectivement couplés de manière rotative auxdits premier et deuxième axes fixes (218, 228) et sollicités de manière élastique vers lesdits bras rotatifs ;
un moteur d'entrainement (230) servant à entraîner lesdits bras d'entraînement (212, 222) par un train d'engrenages (232) couplé auxdites parties dentées (222a) desdits bras d'entraînement (212, 222); et
des moyens de liaison servant à coupler lesdits bras d'entraînement (212, 222) avec lesdits bras rotatifs (211, 221) de façon qu'une force d'entraînement dudit moteur d'entraînement (230) soit transmise à chacun desdits bras rotatifs (211, 221) par l'intermédiaire desdits bras d'entraînement (212, 222).

2. Mécanisme de déplacement de plateaux porte-bobines d'un dispositif d'enregistrement/lecture magnétique selon la revendication 1, dans lequel des moteurs (216, 226) pour entraîner lesdits plateaux porte-bobines sont respectivement installés sur lesdits bras rotatifs (211, 221).

3. Mécanisme de déplacement de plateaux porte-bobines d'un dispositif d'enregistrement/lecture magnétique selon la revendication 1 ou 2, dans lequel lesdits moyens de liaison comprennent :
des cavités (212b, 222b) respectivement formées dans le bas desdits bras d'entraînement (212, 222) ;
des parties échancrées (211c, 221c) formées sur lesdits bras rotatifs (211, 221), correspondant respectivement auxdites cavités (212b, 222b) ; et
des ressorts hélicoïdaux (213, 223) respectivement insérés entre lesdites cavités et lesdites parties échancrées (211c, 221c).

4. Mécanisme de déplacement de plateaux porte-bobines d'un dispositif d'enregistrement/lecture magnétique selon la revendication 1, 2 ou 3, comprenant en outre un moyen de prévention pour empêcher une rotation excessive desdits bras rotatifs (211, 221).

5. Mécanisme de déplacement de plateaux porte-bobines d'un dispositif d'enregistrement/lecture magnétique selon la revendication 4, dans lequel ledit moyen de prévention comporte :
des saillies (211a, 221a) formées sur lesdits bras rotatifs (211, 221) ; et
des butées (217a, 217b, 227a, 227b), formées sur ladite platine (200), pour limiter la rotation desdits bras rotatifs (211, 221) par venue au contact desdites saillies (211a, 221a).

6. Mécanisme de déplacement de plateaux porte-bobines d'un dispositif d'enregistrement/lecture magnétique ayant une paire de plateaux (210, 220) porte-bobines, installés sur une platine (200), sur lesquels sont placées les bobines d'une cassette de bande, et un moyen de réglage pour r6gler l'intervalle entre lesdits plateaux (210, 220) porte-bobines de façon que des cassettes de bandes de différentes dimensions puissent être placées de manière sélective sur lesdits plateaux (210, 220) porte-bobines, ledit moyen de réglage comportant :
de premier et deuxième axes fixes (218, 228) fixés à ladite platine (200) et séparés par un intervalle prédéterminé ;
une paire de bras rotatifs (211, 221), par lesquels sont supportés lesdits plateaux (210, 220) porte-bobines, installés de manière à pouvoir tourner autour desdits premier et deuxième axes fixes (218, 228); et
des moyens de rotation pour faire tourner lesdits bras rotatifs (211, 221), grâce à quoi la distance entre lesdits plateaux (210, 220) porte-bobines est réglée par la rotation desdits bras rotatifs (211, 221), lesdits moyens de rotation comportant des parties dentées (211d, 221d) aux extrémités desdits bras rotatifs (211, 221), lesdites parties dentées (211d, 221d) étant en prise l'une avec l'autre, le mécanisme de déplacement étant **caractérisé en ce qu'**une partie dentée (221d) desdits bras rotatifs (211, 221) est commandée par une force d'entraînement d'un moteur d'entraînement (230) par l'intermédiaire d'un train d'engrenages (232) couplé à ladite partie dentée (221b) dudit bras rotatif.

7. Mécanisme de déplacement de plateaux porte-bobines d'un dispositif d'enregistrement/lecture magnétique selon la revendication 5 ou 6, dans lequel les premier et deuxième trous (200a, 200b) en forme d'arcs correspondant à la rotation desdits plateaux (210, 220) porte-bobines sont formés sur ladite platine (200), et les moteurs (216, 226) d'entraînement desdits plateaux (210, 220) porte-bobines sont respectivement installés sous lesdits bras rotatifs (211, 221).

8. Mécanisme de déplacement de plateaux porte-bobines d'un dispositif d'enregistrement/lecture magnétique selon la revendication 5, 6 ou 7, comprenant en outre un moyeu de prévention pour empêcher une rotation excessive desdits bras rotatifs (211, 221).

9. Mécanisme de déplacement de plateaux porte-bobines d'un dispositif d'enregistrement/lecture magnétique selon la revendication 5, 6, 7 ou 8, dans lequel ledit moyen de prévention comporte :
des saillies (211a, 221a) respectivement formées sur lesdits bras rotatifs (211, 221); et
des butées (217a, 217b, 227a, 227b) formées sur ladite platine (200) pour limiter la rotation desdits bras rotatifs (211, 221) par venue au contact desdites saillies (211a, 221a).
